(19) **Europäisches Patentamt / European Patent Office / Office européen des brevets**

(11) **EP 2 115 573 B1**

(12) **EUROPEAN PATENT SPECIFICATION**

(45) Date of publication and mention
of the grant of the patent:
**04.07.2012 Bulletin 2012/27**

(51) Int Cl.:
***G06F 9/355*** (2006.01)

(21) Application number: **07848091.0**

(86) International application number:
**PCT/EP2007/063850**

(22) Date of filing: **12.12.2007**

(87) International publication number:
**WO 2008/077805 (03.07.2008 Gazette 2008/27)**

(54) **DATA-PROCESSING UNIT**

DATENVERARBEITUNGSEINHEIT

UNITÉ DE TRAITEMENT DE DONNÉES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.12.2006 EP 06127046
23.12.2006 US 871778 P**

(43) Date of publication of application:
**11.11.2009 Bulletin 2009/46**

(73) Proprietor: **Telefonaktiebolaget LM Ericsson (publ)
164 83 Stockholm (SE)**

(72) Inventors:
• **GUSTAFSSON, Harald
223 63 Lund (SE)**

• **PERSSON, Per
247 34 Södra Sandby (SE)**

(74) Representative: **Andersson, Björn E.
Ström & Gulliksson AB
P.O. Box 793
220 07 Lund (SE)**

(56) References cited:
**US-A1- 2004 153 623     US-A1- 2004 255 095
US-B1- 6 314 507     US-B1- 6 453 405
US-B1- 6 643 761**

• **"DSP56300 Family Manual - Chapter 4" August 1999 (1999-08), MOTOROLA , XP002421691 Retrieved from the Internet: URL:http: //www.ecse.rpi.edu/Courses/CStudi o/dsp56303/56300fm.pdf> [retrieved on 2007-02-21] paragraphs [04.1], [04.5]**

## Description

## Technical Field

The present invention relates to a data-processing unit and in particular to memory address generation in a data processing unit.

## Background

A data-processing unit, such as a central processing unit (CPU), digital signal processor (DSP), or a co-processor for a CPU or DSP, can be programmed to perform various algorithms. The efficiency of the data processing unit normally depends e.g. on its ability to access a memory, such as read/write memory, e.g. a random-access memory (RAM), or a read-only memory (ROM), for reading data from and/or writing data to the memory in ways that facilitate efficient execution of the algorithms the data-processing unit is programmed to perform.

To facilitate efficient execution of a wide variety of algorithms, flexible memory address generation is normally desirable. Normally, flexible memory address generation comes at a high cost in circuit area, e.g. because a large number of registers are required to provide different parts to the address computation unit. For example, some DSPs have a dedicated address register file consisting of large number of registers. Furthermore, the registers are typically assigned special tasks, such as dedicated address registers, bank registers for selecting a memory bank, step registers storing a step value for updating the address of an address register, modulo registers for facilitating circular buffering, etc. Further, in order to limit the circuit complexity, restrictions on how registers can be combined may apply. DSP56300 family manual-chapter 4, August 1999, from Motorola, discloses prior art address generation.

In view of the above, a more efficient means for flexible memory addressing in a data processing unit would be desirable.

## Summary

It is an object of the invention to provide efficient means for flexible memory addressing in a data-processing unit.

According to a first aspect, a data-processing unit is provided. The data-processing unit comprises a register unit comprising a register. The data-processing unit further comprises an address-generation unit for generating a memory address to a memory unit. The address-generation unit is adapted to fetch, from the register, a base address stored in a first portion of the register. The address-generation unit is further adapted to fetch, from the register, a first offset address stored in a second portion of the register. The base address and the first offset address are represented with fewer bits than the memory address. Moreover, the address-generation unit is adapted to receive a first instruction. In response thereto, the address-generation unit is adapted to generate a second offset address based on the first offset address and generate the memory address by adding the base address and the second offset address.

The register may be a general-purpose register.

The address-generation unit may be adapted to generate the second offset address identical with the first offset address.

The address-generation unit may be adapted to fetch, from the register, a mode indicator stored in a third portion of the register. The address-generation unit may comprise a scrambler unit adapted to generate the second offset address by reordering bits of the first offset address based on the mode indicator.

The address-generation unit may be adapted to fetch, from the register, mode-dependent data stored in a fourth portion of the register and select which bits in the first offset address to reorder and how to reorder the selected bits in order to generate the second offset address based on the mode-dependent data and the mode indicator.

The scrambler unit may be adapted to generate the second offset address identical with the first offset address based on the mode indicator.

The scrambler unit may be adapted to generate the second offset address by reversing the order of a range of bits in the first offset address based on the mode indicator.

The address-generation unit may be adapted to, in response to receiving the first instruction, generate an updated first offset address by adding the first offset address and a step value. The updated first offset address may be the sum of the first offset address and the step value or a value derived from said sum. The address-generation unit may be adapted to supply the updated first offset address to the register for storage in the second portion of the register.

The address-generation unit may be adapted to fetch, from the register, the step value, which is stored in a fifth portion of the register.

The address-generation unit may comprise a modulo-computation unit adapted to generate the updated first offset address by performing a modulo N operation on the sum of the first offset address and the step value, wherein N is an integer.

The address-generation unit may be adapted to fetch, from the register, the integer N, which is stored in a sixth portion of the register.

The address-generation unit may be adapted to fetch, from the register, a third offset address stored in a seventh portion of the register. The third offset address is represented with fewer bits than the memory address. The address-generation unit may further be adapted to receive a second instruction and in response thereto generate the second offset address based on the third offset address and generate the memory address by adding the base address and the second offset address.

The register unit may comprise a plurality of registers. The address-generation unit may be adapted to fetch the base address and the first offset address from any one of the plurality of registers.

According to a second aspect, an electronic apparatus comprises the data-processing unit.

The electronic apparatus my e.g. be any of a portable or handheld mobile radio communication equipment, a mobile radio terminal, a mobile telephone, a pager, a communicator, an electronic organizer, a smartphone and a computer.

According to a third aspect, a method for generating a memory address is provided. The method comprises fetching, from a register a base address stored in a first portion of the register and a first offset address stored in a second portion of the register. Each of the base address and the first offset address are represented with fewer bits than the memory address. According to the method, a second offset address is generated based on the first offset address. The memory address is generated by adding the base address and the second offset address.

According to a fourth aspect, a computer program product comprises computer program code means for executing the method when said computer program code means are run by an electronic device having computer capabilities.

According to a fifth aspect, a computer readable medium has stored thereon a computer program product comprising computer program code means for executing the method when said computer program code means are run by an electronic device having computer capabilities.

It is an advantage of some embodiments that the design of a data-processing unit, with a relatively small circuit area, having flexible addressing modes is facilitated.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

**Brief Description of the Drawings**

Further objects, features and advantages of the invention will appear from the following detailed description of the invention, reference being made to the accompanying drawings, in which:

Figs. 1 and 3-9 are block diagrams of part of a data-processing unit according to embodiments;
Fig. 2 is a schematic illustration of a memory unit according to an embodiment;
Fig. 10 is a schematic illustration of partitioning of a register according to an embodiment;
Figs. 11a and b illustrate schematically addition of a base address and an offset address for forming a memory address according to embodiments; and
Fig. 12 is a flow chart of a method for generating a memory address.

**Detailed Description**

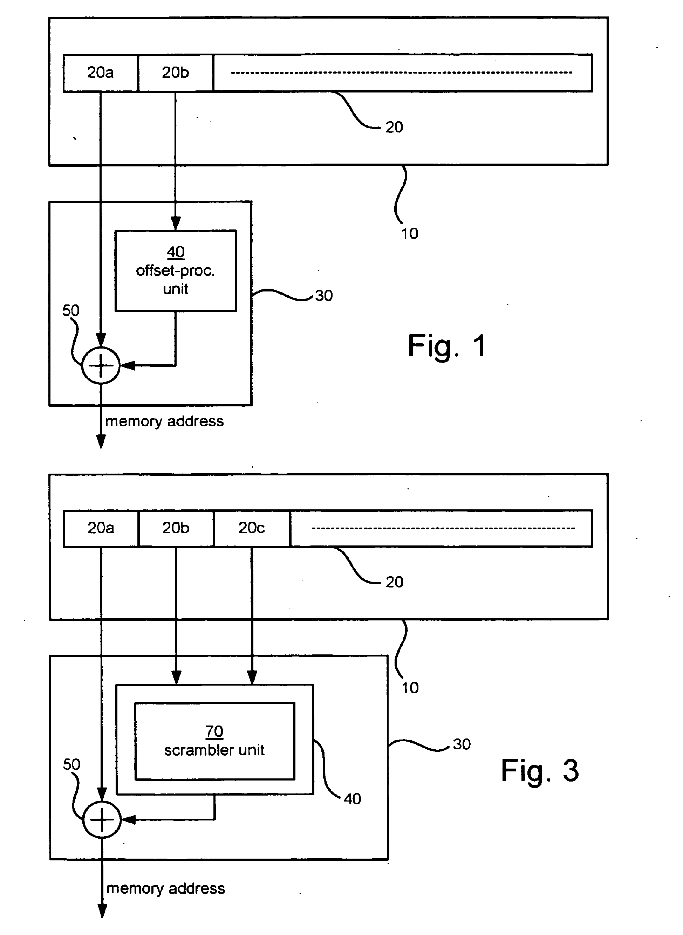

Fig. 1 is a block diagram of part of a data-processing unit according to an embodiment. The data-processing unit may e.g. be, but is not limited to, a central processing unit (CPU), a digital signal processor (DSP), or a co-processor connected to or incorporated with a CPU or a DSP.

The data-processing unit comprises a register unit 10. The register unit comprises at least one register 20. The register 20 may be a general-purpose register. The register unit 10 may comprise further registers, such as general-purpose registers and/or special-purpose registers.

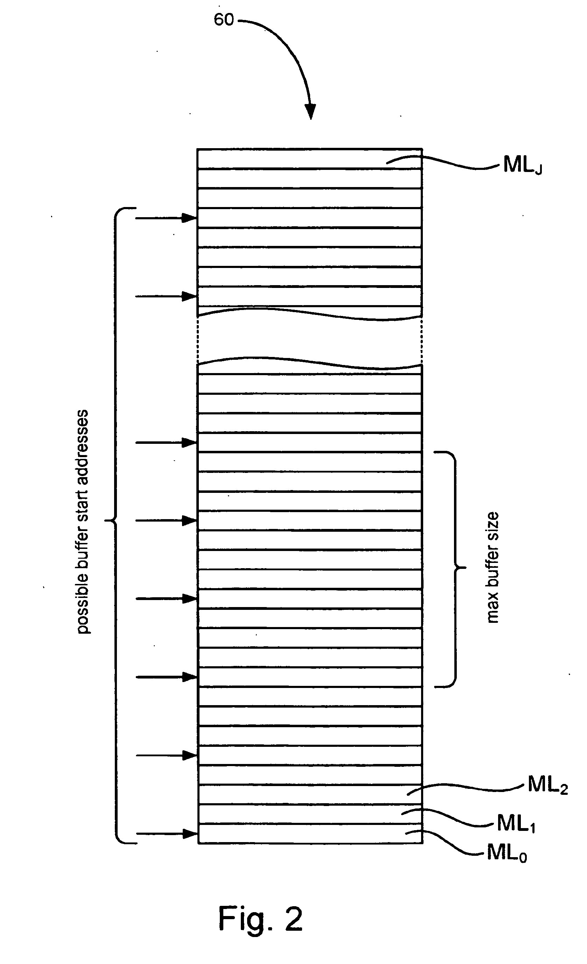

The data-processing unit comprises a means for generating memory addresses to be used by the data-processing unit when performing some activity, such as executing an instruction, that requires access to a memory. The means for generating memory addresses comprises an address-generation unit 30. The address generation unit 30 is operatively connected to the register unit 10. The address-generation unit 30 is adapted to generate a memory address to a memory 60 (Fig. 2) based on information in the register unit 10. The memory 60 may be comprised in the data-processing unit. Alternatively, the memory 60 may be an external memory operatively connected to the data-processing unit. The memory 60 may be a read/write memory, such as but not_limited to a random-access memory (RAM). Alternatively, the memory 60 may be a read-only memory (ROM). The memory 60 may also be combinations of such memory types.

According to embodiments, the address-generation unit 30 is adapted to fetch various data from different portions of a register, such as the register 20, and generate the memory address based on said various data.

According to some embodiments, the functionality of the address-generation unit 30 is fixed. For example, which the different portions of the register are, the sizes thereof (e.g. in terms of number of bits), and the locations thereof within the register, may be fixed. In other words, the way in which the address-generation unit 30 interprets the contents of the register may be fixed.

According to other embodiments, the functionality of the address-generation unit 30 is configurable. For example, which the different portions of the register are, the sizes thereof, and/or the locations thereof within the register, may be different in different modes of the address-generation unit 30. In other words, the way in which the address-generation unit 30 interprets the contents of the register may be different in different modes of the address-generation unit 30. According to some embodiments, the mode of the address-generation unit 30 can be varied dynamically during operation of the data-processing unit. For example, the mode of the address-generation unit may be set in response to which software instruction of the data-processing unit that utilizes the address-generation unit 30 for generating the memory address.

The address-generation unit 30 is adapted to fetch, from the register 20, a base address stored in a first portion 20a of the register 20. The address-generation unit 30 is further adapted to fetch, from the register 20, a first offset address stored in a second portion 20b of the register.

The dotted line drawn within the register 20 in Fig. 1 is included to indicate that the register may, but does not necessarily, comprise further portions wherein various types of data may be stored. This convention is adhered to throughout the drawings.

The address-generation unit 30 is adapted to generate the memory address by adding the base address and an offset address derived from the first offset address.

According to some embodiments, the address generation unit is adapted to receive a first instruction from the data processing unit. In response to receiving the first instruction, the address-generation unit is adapted to generate a second offset address based on the first offset address and generate the memory address by adding the base address and the second offset address.

According to the embodiment illustrated in Fig. 1, the address-generation unit 30 comprises an offset-processing unit 40. The offset-processing unit 40 is adapted to generate the second offset address. The address-generation unit 30 may further comprise an adder 50, which is adapted to generate the memory address by adding the base address and the second offset address.

Fig. 2 illustrates the memory 60 schematically in accordance with an embodiment. According to the embodiment, the memory 60 has a K-bit address input (not shown), where K is an integer. Hence, the memory address is represented with K bits. The memory 60 further comprises $2^k$ memory locations $ML_0$, $ML_1$, ..., $ML_J$, where $J = 2^K - 1$. Each memory location $ML_0$, $ML_1$,..., $ML_J$ has a storage capacity, which may be the same for all memory locations $ML_0$, $ML$ ,..., $ML_J$. The storage capacity may be, but is not limited to, an integer number of bytes. A memory location is accessed, e.g. for reading or writing to the memory location, by supplying the corresponding memory address to the memory 60. For example, the memory location $ML_x$ may be accessed by supplying the memory address X. The memory 60 may be a physical memory, such as a physical RAM, having $2^K$ memory locations. Alternatively, the memory 60 may be a virtual memory, comprising a physical memory, such as a physical RAM, with less than $2^K$ memory locations, and a secondary storage from/to which data can be swapped to/from the physical memory, as is known in the art.

A memory buffer in the memory 60 may be allocated to and associated with a software process running on the data-processing unit. The buffer may be utilized to store a plurality of data elements, such as, but not limited to, elements of an array or vector of elements. Each element may e.g. span over one or more memory locations $ML_0$, $ML_1$,..., $ML_J$, depending on the number of bits used for representing the element. The base address may indicate a reference address, such as the start address, of the buffer. The first offset address may indicate the address, relative to said reference address, of an individual element within the buffer.

The memory address for an individual element within the buffer may be generated as follows. The start address of the buffer may be stored in the first portion 20a of the register 20. An offset address associated with the individual element may be stored in the second portion 20b of the register 20. Then, the first instruction may be supplied to the address-generation unit 30 by the data-processing unit. In response thereto, the address-generation unit 30 generates the memory address to the individual element.

According to an embodiment, the base address and the first offset address are represented with fewer bits than the memory address. For example, the base address may be represented with L bits, where L < K. In other words, the first portion 20a of the register 20 may span L bits of the register 20. Further, the first offset address may be represented with M bits, where M < K. In other words, the second portion 20b of the register 20 may span M bits of the register 20.

According to an embodiment, the L bits representing the base address have the same associated weights as the L most significant bits (MSBs) of the memory address. In other words, the base address is an integer given by

$$\text{base address} = \sum_{j=0}^{L-1} b_j 2^{j+K-L}$$

where $b_j$, j = 0, 1 ,...., L-1, is the j:th bit of the base address, $b_0$ is the least significant bit (LSB), $b_{L-1}$ is the MSB, and $2^{j+K-L}$ is the weight of b.

Further, according to the embodiment, the M bits representing the first offset address has the same weight as the M LSBs of the memory address. In other words, the offset address is an integer given by

$$\text{first offset address} = \sum_{j=0}^{M-1} o_j 2^j$$

where $o_j$, $j = 0, 1, ..., M-1$, is the j:th bit of the first offset address, $O_0$ is the LSB, $O_{M-1}$ is the MSB, and $2^j$ is the weight of of.

An advantage of representing the base address and the first offset address with fewer bits than the memory address is that, by suitably selecting the values of L and M, the base address and the first offset address can be stored together in a single register 20. Further, by suitably selecting the values of L and M, further information regarding the address generation may be stored in the same register 20, such as information regarding different addressing modes. Moreover, more than one offset address may be stored in the register 20, such as separate offset addresses for reading from and writing to the buffer. The register 20 may be a general-purpose register, thus avoiding the need for special-purpose address registers. Thereby, the circuit area required for registers in the data-processing unit may be reduced compared with a data-processing unit comprising special-purpose address registers.

A consequence of representing the base address with fewer bits than the memory address is that the number of possible buffer start addresses is restricted to a number which is less than the number of different memory addresses. This is indicated in Fig. 2 by arrows pointing at possible buffer start addresses according to an example. The number of bits representing the base address may typically be selected from case to case such that this consequence does not pose a practical restriction on the data processing unit. For example, the number of bits may be separately designated for each individual implementation of the data processing unit, e.g. based on system requirements for the implementation. Alternatively, if a configurable address-generation unit 30 is used, the number of bits may be separately designated for each individual mode of the address-generation unit 30, e.g. based on system requirements for the individual mode.

According to the example illustrated in Fig. 2, a buffer may start at every fourth memory location. Hence, in this example, the base address is represented with 2 bits less than the memory address. It should be emphasized that this is only an example used for illustration and the difference in number of bits representing the memory address and the base address is not limited thereto.

A consequence of representing the first offset address with fewer bits than the memory address is that the maximum possible size of a buffer, in terms of storage capacity, is less than the total size of the memory. The maximum buffer size according to an example is indicated in Fig. 2. The number of bits representing the first offset address may typically be selected from case to case such that this consequence does not pose a practical restriction on the data processing unit. For example, the number of bits may be separately designated for each individual implementation of the data processing unit, e.g. based on system requirements for the implementation. Alternatively, if a configurable address-generation unit 30 is used, the number of bits may be separately designated for each individual mode of the address-generation unit 30, e.g. based on system requirements for the individual mode.

According to the example illustrated in Fig. 2, a maximum-size memory buffer spans over 16 memory locations. Hence, in the example, the first offset address is represented with four bits. It should be emphasized that this is only an example used for illustration and the number of bits representing the first offset address is not limited thereto.

According to some embodiments, the address generation unit is adapted to generate the second offset address identical with the first offset address. In these embodiments, the offset-processing unit 40 (Fig. 1) may be implemented with a direct connection between the second portion 20b of the register 20 and the adder 50. Alternatively, intervening elements, such as registers or buffers internally in the address-generation unit 30 may be located between the register 20 and the adder, e.g. in the paths between the adder and the first and/or second portions 20a, 20b of the register 20.

Fig. 3 is a block diagram of part of the data-processing unit according to an embodiment. According to the embodiment, the address-generation unit 30 is adapted to fetch, from the register 20, a mode indicator stored in a third portion 20c of the register. The address-generation unit 30 is adapted to generate the second offset address by reordering bits of the first offset address based on the mode indicator. For this purpose, the offset-processing unit 40 may comprise a scrambler unit 70 adapted to generate the second offset address by reordering bits of the first offset address based on the mode indicator.

According to an embodiment, the scrambler unit 70 is adapted to generate the second offset address identical with the first offset address based on the mode indicator. For example, the second offset address may be generated identical with the first offset address when the mode indicator indicates that a first addressing mode is to be used. This addressing mode is normally referred to as a linear addressing mode.

According to an embodiment, the scrambler unit 70 is adapted to generate the second offset address by reversing the order of a range of bits in the first offset address based on the mode indicator. For example, the bits between bit j and bit k of the first offset address can be reversed to have the opposite order. The second offset address may e.g. be generated by reversing the order of a range of bits in the first offset address when the mode indicator indicates that a second addressing mode is to be used. This addressing mode is normally referred to as a bit-reversed addressing mode. It is typically used for fast Fourier transform (FFT) computations.

According to an embodiment, the scrambler unit 70 is adapted to generate the second offset address by shifting the first offset address based on the mode indicator. For example, the second offset address may be generated by shifting the first offset address when the mode indicator indicates that a third addressing mode is to be used. This addressing mode may be useful if the data elements to be accessed starts at every $2^i$th (e.g. every 2nd, 4th, 8th, etc.) memory location in the buffer.

According to an embodiment, the offset-processing unit 40 is adapted to generate the second offset address by multiplying the first offset address with a first integer and adding a second integer. For example, the second offset address may be generated by multiplying the first offset address with the first integer and adding the second integer when the mode indicator indicates that a fourth addressing mode is to be used. This addressing mode may e.g. be useful for accessing interleaved data in a memory buffer. For example, video data in RGB format may be stored in a buffer in an interleaved fashion, e.g. in the order red (R), green (G), blue (B), R, G, B, R, G, B, etc. For accessing memory locations in the buffer storing "R" data, the first integer may be set to 3 and the second integer to 0. For accessing memory locations in the buffer storing "G" data, the first integer may be set to 3 and the second integer to 1. For accessing memory locations in the buffer storing "B" data, the first integer may be set to 3 and the second integer to 2.

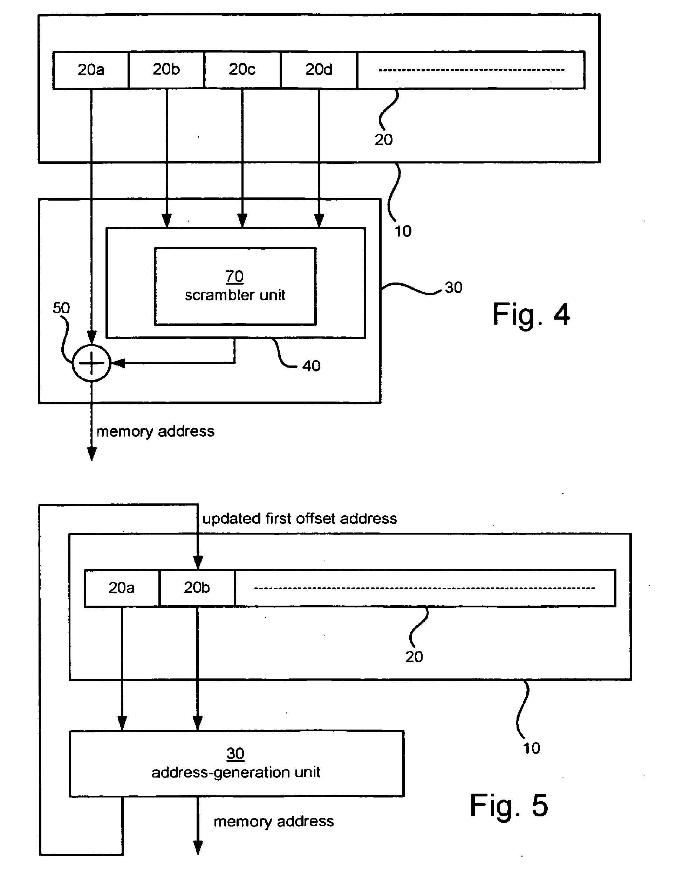

Fig. 4 is a block diagram of part of the data-processing unit according to embodiments. As in the embodiment shown in Fig. 3, the address-generation unit 30 is adapted to fetch, from the register 20, the mode indicator stored in the third portion 20c of the register 20. Further, the address-generation unit 30 is adapted to fetch, from the register 20, mode-dependent data stored in a fourth portion 20d of the register 20.

According to some embodiments, the address-generation unit 30 is adapted to select which bits in the first offset address to reorder and how to reorder the selected bits in order to generate the second offset address based on the mode-dependent data and the mode indicator. For example, when the mode indicator indicates that the second addressing mode is to be used, the mode-dependent data may e.g. be set to indicate a start bit and an end bit of the range of bits in the first offset address to reverse the order of.

Further, when the mode indicator indicates that the third addressing mode is to be used, the mode-dependent data may e.g. be set to indicate the number of bit positions to shift the first offset address with.

According to some embodiments, when the mode indicator indicates that the fourth addressing mode is to be used, the mode-dependent data may be set to indicate the values of the first and the second integers.

In alternative embodiments, the mode indicator and/or the mode-dependent data may be included in the first instruction instead of being fetched from the register 20.

Fig. 5 is a block diagram of part of the data-processing unit according to an embodiment. According to the embodiment, the address-generation unit 30 is adapted to, in response to receiving the first instruction, generate an updated first offset address in addition to generating the memory address. According to the embodiment, the address-generation unit 30 is adapted to generate the updated first address by adding the first offset address and a step value.

The updated first offset address may be the sum of first offset address and the step value. Alternatively, the updated first offset address may be derived from the sum of first offset address and the step value. For example, the address-generation unit 30 may comprise a modulo-computation unit 80 adapted to generate the updated first offset address by performing a modulo N operation on the sum of the first offset address and the step value, wherein N is an integer. Thereby, the first offset address is confined within the interval [0, N-1]. This type of modulo operation is e.g. useful for addressing a circular buffer. Circular buffers are known in the art and will not be further discussed here.

The address-generation unit 30 is further adapted to supply the updated first offset address to the register 20 for storage in the second portion 20b of the register, replacing the previous first offset address.

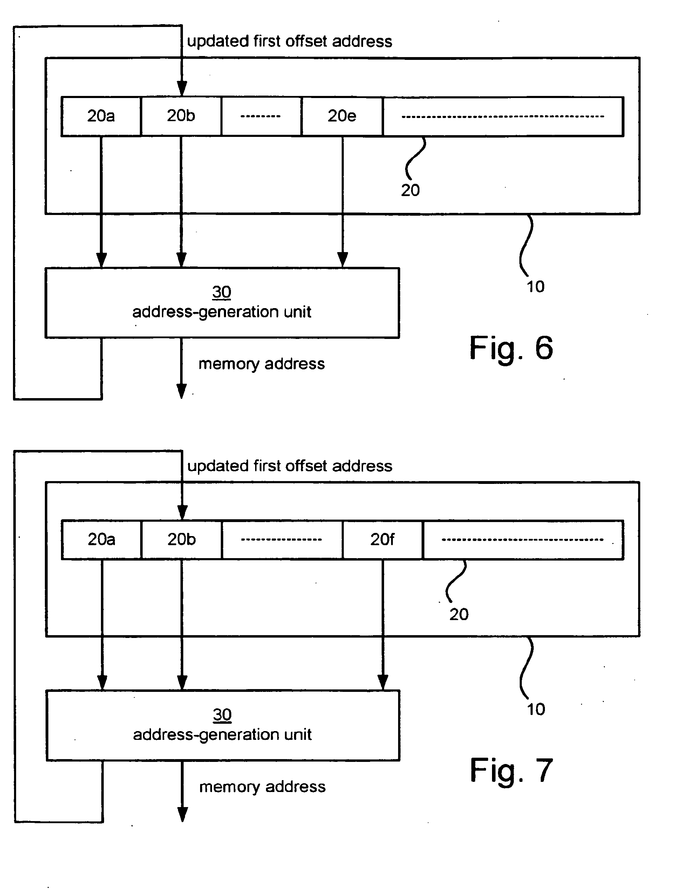

Fig. 6 is a block diagram of part of the data-processing unit according to an embodiment. According to the embodiment, the address-generation unit 30 is adapted to fetch, from the register 20, the step value, which is stored in a fifth portion 20e of the register.

Alternatively, the step value may be included in the first instruction.

Fig. 7 is a block diagram of part of the data-processing unit according to an embodiment. According to the embodiment, address-generation unit 30 is adapted to fetch, from the register 20, the integer N, which is stored in a sixth portion 20f of the register 20. The integer N may then be utilized for the modulo N operation during generation of the updated first offset address. Alternatively, the integer N may be included in the first instruction.

Storing the integer N in the same register 20 as the base address and the first offset address is facilitated by suitably choosing the values of L and M, i.e. the number of bits representing the base address and first offset address. Thereby, no special-purpose modulo register is required for the offset address updating.

Further, all necessary information for the modulo N operation can be stored in the register 20. For example, if a modulo N operation is to be applied, the integer N is stored in the sixth portion 20f of the register 20. If no modulo N operation is to be applied, all bits in the sixth portion 20f of the register 20 may be set to zero. Alternatively, a bit in the register may be used as a flag for indicating whether or not the modulo N operation should be applied. Hence, there is no need for a special-purpose instruction in the data-processing unit for updating the first offset address by means of an operation including a modulo N operation. Thereby, the required storage space for micro code is reduced compared with a data-processing unit having a special-purpose instruction for updating the first offset address by means of an operation including a modulo N operation.

According to some embodiments, wherein a configurable address-generation unit 30 is used, the address-generation unit 30 may have some modes wherein the sixth portion 20f of the register is not included and some modes where it is included. When no modulo N operation is required, the address-generation unit 30 may be set in a mode, wherein the sixth portion 20f is not included. Thereby, bits of the register 20 that would otherwise be allocated the sixth portion 20f may be allocated to other portions of the register 20 instead.

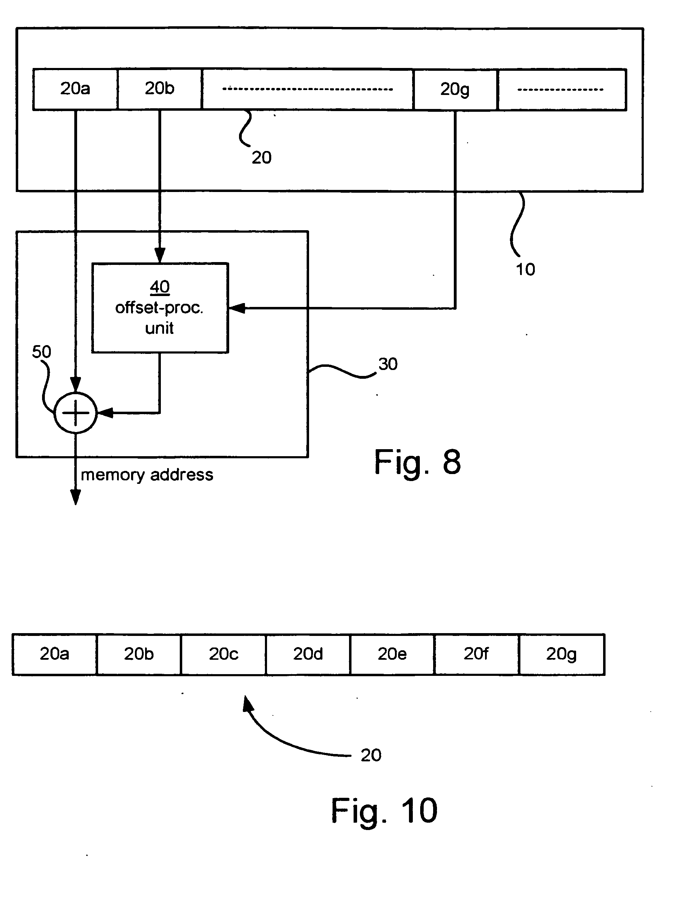

Fig. 8 is a block diagram of part of the data-processing unit according to an embodiment. According to the embodiment, the address-generation unit 30 is adapted to fetch, from the register 20, a third offset address stored in a seventh portion 20g of the register. The address generation unit 30 is further adapted to receive a second instruction from the data processing unit. In response to receiving the second instruction; the address-generation unit 30 is adapted to generate the second offset address based on the third offset address, and generate the memory address by adding the base address and the second offset address. The generation of the second offset address based on the third offset address may e.g. be carried out in the same way as the generation of the second offset address based on the first offset address in accordance with any of the embodiments described above.

According to some embodiments, the address-generation unit 30 is adapted to, in response to receiving the second instruction, generate an updated third offset address in addition to generating the memory address, similar to the generation of the updated first offset address described above. The address-generation unit 30 may be adapted to generate the updated third offset address by adding the third offset address and a step value. The step value may be the same step value that is used for generating the updated first offset address. Alternatively different step values may be used for generating the updated first and third offset addresses. Similarly to the generation of the updated first offset address, the generation of the updated second offset address may include a modulo P operation on the sum of the second offset address and the step value, where P is an integer. The integer P may be identical with the integer N. Alternatively different integers N and P may be utilized in the modulo operations carried out for generating the updated first and third offset addresses, respectively.

The integer P and/or the step value used for generating the updated third offset address may be stored in portions of the register 20, from where the address-generation unit 30 may be adapted to fetch them.

Alternatively, any of the integer P and the step value used for generating the updated third offset address may be included in the second instruction.

The address-generation unit is further adapted to supply the updated third offset address to the register 20 for storage in the seventh portion 20g of the register, replacing the previous third offset address.

As for the first offset address, the third offset address is represented with fewer bits than the memory address according to an embodiment. An advantage thereof is that, by suitably selecting the number of bits that represents the base address, the first offset address, and the third offset address, these can be stored in a single register 20. Further, by suitably selecting said number of bits, further information regarding the address generation may be stored in the same register 20, such as the mode indicator, mode-dependent data, step value, and/or integer N.

According to an embodiment, the first offset address is a read-offset address indicating the address to the element in the buffer that is subject to the next read operation. According to the embodiment, the third offset address is a write-offset address indicating the address to the element in the buffer that is subject to the next write operation. In the embodiment, the first instruction is an instruction for generating a read address, i.e. a memory address to the element in the buffer that is subject to the next read operation. Further, the second instruction is an instruction for generating a write address, i.e. a memory address to the element in the buffer that is subject to the next write operation.

According to another embodiment, the first offset address is a write-offset address and the third offset address is a read-offset address. In this embodiment, the first instruction is an instruction for generating a write address and the second instruction is an instruction for generating a read address.

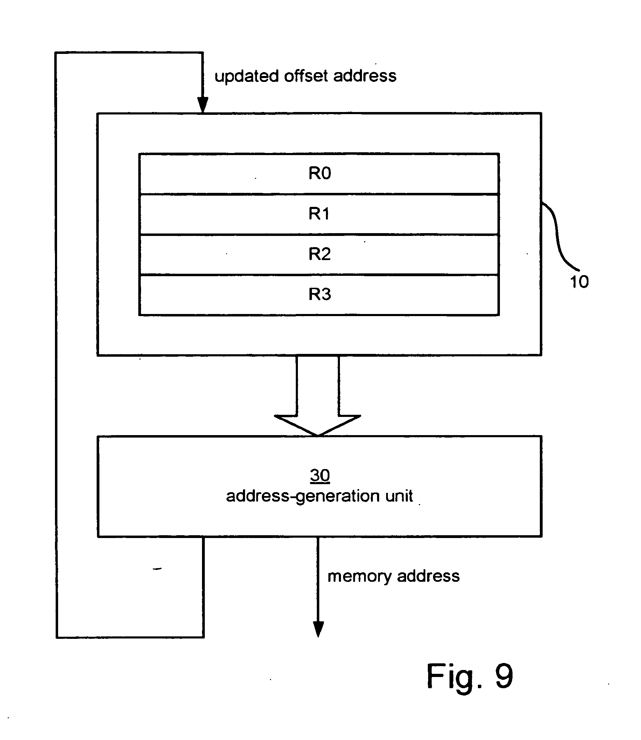

Fig. 9 is a block diagram of part of the data-processing unit according to an embodiment. In this embodiment, the register unit 10 comprises a plurality of registers R0-R3. In Fig. 9, the number of registers R0-R3 is four. However, other numbers are possible as well. The registers R0-R3 may be general purpose registers. The address-generation unit 30 is in this embodiment adapted to exchange data with any of the registers R0-R3, e.g. in the same way as with the register 20 according any of the embodiments described above. Having more than one register R0-R3 e.g. facilitates storing address references, such as pointers, to more than one buffer in the register unit 10. As indicated in Fig. 9, an operative connection between the address-generation unit 30 and the register unit 10 may be provided for transferring an updated offset address, such as an updated first offset address and/or an updated third offset address to any of the registers R0-R3 in the register unit 10.

Which of the registers R0-R3 the address-generation unit 30 is set to exchange data with for generating the memory address may be specified in software instructions. Such software instructions may specify one or more of the registers R0-R3. An example of an assembler-code instruction that form part of the instruction set of the data-processing unit according to an embodiment is described below to illustrate how software instructions may specify which of the registers are to be used. In the embodiment, both a first and a third offset address is used. The first offset address is a read-offset address and the third offset-address is a write-offset address.

ADD @RD, @RM, @RN

This assembler-code instruction is used for adding a first and a second operand. The @-sign indicates that indirect addressing is used, i.e. that the memory address to an operand is to be generated by means of the address-generation unit 30 based on the content of a register. The first operand is to be fetched from the memory 60 from a memory location indicated by the content of register RM, which may be any of the registers R0-R3. The second operand is to be fetched from the memory 60 from a memory location indicated by the content of register RN, which may be any of the registers R0-R3. The result of the addition is to be stored in the memory 60 at a memory location indicated by the content of the register RD, which may be any of the registers R0-R3.

When execution this assembler-code instruction, the data-processing unit first provides a connection between the address-generation unit 30 and the register RM. Then, the first instruction is supplied to the address-generation unit 30. In response thereto, the address-generation unit 30 generates a first memory address based on the base address and the first offset address stored in the register RM. The memory 60 is addressed with the first memory address, and the first operand is fetched from the memory 60 to an arithmetic-logic unit (ALU, not shown) of the data-processing unit.

Next, the data-processing unit first provides a connection between the address-generation unit 30 and the register RN. Then, the first instruction is supplied to the address-generation unit 30. In response thereto, the address-generation unit 30 generates a second memory address based on the base address and the first offset address stored in the register RN. The memory 60 is addressed with the second memory address, and the second operand is fetched from the memory 60 to the ALU.

The ALU performs the addition of the first and the second operand. Subsequently, the data-processing unit first provides a connection between the address-generation unit 30 and the register RD. Then, the second instruction is supplied to the address-generation unit 30. In response thereto, the address-generation unit 30 generates a third memory address based on the base address and the second offset address stored in the register RD. The memory 60 is addressed with the third memory address, and the result of the addition is written to the memory 60.

In addition to generating the first, second, and/or third memory address, the address generation unit may be adapted to generate an updated first offset address of the register RM, an updated first offset address of the register RN, and/or an updated third offset address of the register RD.

Above, the execution of the assembler-code instruction has been described above as being carried out in a certain order. This is only an example. The execution may be carried out in a different order. The order may be controlled by micro code of the data processing unit. Further, some steps may be carried out in parallel. For example, the third memory address may be generated in parallel with that the ALU performs the addition. Moreover, the address-generation unit 30 may be adapted to generate two or more of the first, second, and third memory addresses in parallel. Alternatively, the data-processing unit may comprise more than one address-generation unit 30 for generating memory addresses in parallel.

Similar assembler-code instructions may be provided for other two-operand arithmetic or logic operations, such as multiplication, division, subtraction, bitwise AND, bitwise OR, bitwise XOR, etc. Other types of assembler-code instructions, such as instructions with a single operand, instructions wherein a source and/or a destination is addressed directly (i.e. the memory address of the source and/or destination is included in the instruction), and/or instructions where a source and/or a destination is a register rather than a memory location may also be provided, as would be readily understood by a person skilled in the art.

As has been described above, the registers 20 (Figs. 1, 3-8) and R0-R3 (Fig. 9) may be general-purpose registers. According to embodiments, the data processing unit comprises functional units, other than the address-generation unit 30, that utilize the general-purpose registers. The functional units may e.g. be, but is not limited to, any of an ALU, a multiply-accumulate (MAC) unit, a butterfly unit for performing butterfly computations for e.g. data transforms, such as fast Fourier transforms (FFTs), discrete cosine transforms (DCTs), etc., a floating-point unit, and the like. The general-purpose registers may e.g. be utilized by the functional units as source and/or destination registers. By using a general-purpose register for storing the data used by the address-generation unit 30 for generating a memory address, the number of registers may be reduced compared with a data-processing unit requiring special-purpose address registers.

Fig. 10 illustrates partitioning of the register 20 (Figs. 1, 3-8) into different portions according to an embodiment. The same partitioning may be used for one or more of the registers R0-R3 (Fig. 9). In the embodiment, the register 20 is a 64-bit register. The memory 60 is a 16-kbyte memory having $2^{14} = 16384$ memory locations of one byte each and a 14-bit address input.

According to the embodiment, the base address is represented with 9 bits, i.e. the first portion 20a spans over 9 bits in the register 20. Thereby, every 32nd memory location may serve as a start address for a buffer in the memory 60.

Further, according to the embodiment, the first offset address, the second offset address, and the integer N used for modulo N operations are all represented with 11 bits each. In other words, the second portion 20b, the sixth portion 20f, and the seventh portion 20g each span over 11 bits of the register. Note that there is no reason for representing the integer N with more bits than the offset-addresses; for the modulo N operation to make sense, the integer N should be smaller than or equal to the maximum offset address. Representing the first and second offset addresses with 11 bits results in that the maximum buffer size is 2 kbytes.

According to the embodiment, the mode indicator, mode-dependent data, and step value are represented with seven, eight, and seven bits, respectively. In other words, the third portion 20c, fourth portion 20d, and fifth portion 20e of the register 20 span over seven, eight, and seven bits in the register 20, respectively.

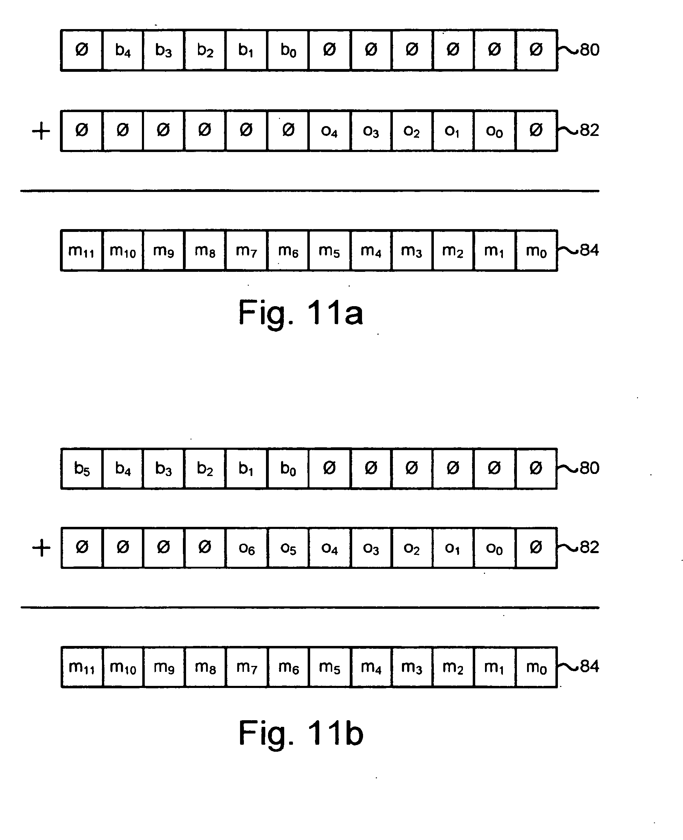

Fig. 11a illustrates schematically addition of a base address 80 and an offset address 82, that each is represented with fewer bits than a memory address 84, for forming the memory address 84 according to an embodiment. In the embodiment illustrated in Fig. 11a, the base address 80 is represented with 5 bits, denoted $b_0$ - $b_4$, where $b_0$ is the LSB and $b_4$ is the MSB. Furthermore, in the embodiment, the offset address 82 is represented with 5 bits, denoted $O_0$ - $O_4$, where $O_0$ is the LSB and $O_4$ is the MSB. Moreover, in the embodiment, the memory address 84 is represented with 12 bits. The representation with 5 bits for the base address 80, 5 bits for the offset address 82, and 12 bits for the memory address 84 are only examples used for illustration.

To facilitate the addition of the base address 80 and the offset address 82 for forming the memory address 84, default bit values may be inserted into bit positions of the base address 80 and the offset address 82 in order to give the base address 80 and the offset address 82 the same number of bits as the memory address 84 before performing the addition operation. In the embodiment illustrated in Fig. 11a, the default bit values are all zeros, denoted with the symbol "∅" in Fig. 11a. According to other embodiments, one or more of the default bit values may be ones. Note that the default bit values can be inserted by the address-generation unit 30. Therefore, the default bit values does not need to be stored in the register 20 (Figs. 1, 3-8, and 10) or R0-R3 (Fig. 9), only the bits $b_0$ - $b_4$ and $O_0$ - $O_4$ need to be stored in the register 20 or R0 - R3.

In the embodiment illustrated in Fig. 11a, there is no overlap between non-zero bits in the base address 80 and the offset address 82. The bits $m_0$ and $m_{11}$ of the memory address 84 are always zero. The bits $m_1$ - $m_5$ of the memory address 84 are equal to the bits $O_0$ - $O_4$ of the offset address 82. Similarly, the bits $m_6$ - $m_{10}$ of the memory address 84 are equal to the bits $b_0$ - $b_4$ of the base address 82. For this embodiment, the memory address 84 can be generated by simply inserting bits from the base address 80 and offset address 82 into bit positions of the memory address. Hence, no general adder circuitry is required.

Fig. 11b illustrates schematically addition of a base address 80 and an offset address 82, that each is represented with fewer bits than a memory address 84, for forming the memory address 84 according to another embodiment. In this embodiment, the base address 80 is represented with 6 bits, denoted $b_0$ - $b_5$, where $b_0$ is the LSB and $b_5$ is the MSB. Furthermore, in the embodiment, the offset address 82 is represented with 7 bits, denoted $O_0$ - $O_6$, where $O_0$ is the LSB and $O_6$ is the MSB. Moreover, in the embodiment, the memory address 84 is represented with 12 bits. Again, the representation with 6 bits for the base address 80, 7 bits for the offset address 82, and 12 bits for the memory address 84 are only examples used for illustration.

Similar to the embodiment of Fig. 11a, default bit values are inserted into bit positions of the base address 80 and the offset address 82. As for the embodiment in Fig. 11a, the default bit values are all zeros. However, for other embodiments, one or more of the default bit values may be ones. For the embodiment illustrated in Fig. 11b, there is a partial overlap between the bits $b_0$ - $b_5$ of the base address 80 and the bits $O_0$ - $O_6$ of the offset address 82, namely for the bits $b_0$ - $b_1$ and $O_5$ - $O_6$. The bit $m_0$ of the memory address 84 is always zero in this embodiment. The bits $m_1$ - $m_5$ of the memory address 84 are equal to the bits $O_0$ - $O_4$ of the offset address 82 and can be generated by insertion of the bits $0_0$ - $O_4$ into the appropriate bit positions of the memory address 84. For the generation of the bits $m_6$ - $m_{11}$ of the memory address 84, adder circuitry may be used.

The embodiments illustrated in Figs. 11a and b are only examples used for illustration and the scope of the invention is not limited thereto.

According to some embodiments, the circuitry for adding the base address 80 and the offset address 82 (Figs. 11a and b) may be simplified based on knowledge of what the default bit values (zeros in Figs. 11a and b) are. For example, as describe above for the embodiment illustrated in Fig. 11a, the addition can be performed by simply inserting bits from the base address 80 and the offset address 82 into the memory address. Similarly, for the embodiment illustrated in Fig. 11b, the bits $m_1$ - $m_5$ of the memory address 84 can be generated by insertion of bits from the offset address 82, and the bits $m_8$ - $m_{11}$ of the memory address 84 can be generated with a simplified adder circuitry operating only on bits $b_2$ - $b_5$ from the base address 80 and carry bits propagated from the generation of bits $m_6$ - $m_7$ of the memory address 84. In view of the above, it is readily appreciated that, in some cases, the default bit values do not have to be actually inserted into the base address 80 and/or offset address 82 and supplied to input terminals of adder circuitry for adding the base address 80 and the offset address 82. Instead, some or all of the default bit values may be implied in the design of the, possibly simplified, circuitry for adding the base address 80 and the offset address 82.

Storing address references to elements in buffers of a memory in registers in the form of a base address and one or more offset addresses in the same register, as has been described above, facilitates for example efficient defragmentation of the memory 60. Due to e.g. a subroutine call, interrupt, or context switch in e.g. a multi-threading processor, buffers may be inactive, i.e. unused by the currently running process. The register content of registers storing address references to inactive buffers may be moved to a dedicated memory or dedicated memory area. During defragmentation of the memory 60, inactive buffers may be relocated to new buffer start addresses in order to increase the sizes of blocks of unallocated contiguous memory locations, as is known in the art.

Address references to elements within a buffer that has been relocated needs to be updated to the new address of the element. According to some known defragmentation schemes, this requires that each address reference to elements in the memory is compared with the old start address and the old end address of the buffer that has been relocated to find out if the element to which the address reference refers is an element within the buffer that has been relocated. If this is the case, the address reference is updated by adding the difference between the new start address and the old start address.

If instead the address references has been stored in a dedicated memory or memory area in the form of a base address and one or more offset addresses, as above, the updating of the address references is simplified. Since, in this embodiment, all address references to elements within the same buffer use the same single base address, which may be equal to the start address of the buffer, only the base addresses stored in the dedicated memory or memory area needs to be compared with the old start address of the buffer that has_been relocated during the defragmentation. Updating the address references can in this way be efficiently accomplished by replacing all base addresses that are equal to the old start address of the buffer that has been relocated with the new start address of said buffer.

The embodiments described above facilitates the design of a data-processing unit with a relatively small circuit area having flexible addressing modes. For example, the data for generating and/or updating a memory address, such as base address, offset address(es), mode indicator, mode-dependent data, step value(s), and/or integer(s) for modulo operations can be stored in a single general-purpose register. Thereby, flexible addressing modes can be obtained without the need for special-purpose address registers. Since general-purpose registers can be used for different purposes, the number of registers can be kept relatively low and, consequently, the circuit area required for registers may be kept relatively low as well. Further, by storing the information required for the address generation in the register, flexible addressing modes may be obtained while the amount of micro code for handling the flexible addressing modes is kept relatively low. Thereby, the memory area required for storing microcode for the data-processing unit may be kept relatively small.

Some providers of DSPs and CPUs provide an open interface to the DSP or CPU to which their customers may connect their own circuitry. Such circuitry may e.g. be a coprocessor that can be utilized for extending the instruction set of the DSP or CPU and/or provide an accelerated performance to the DSP or CPU. A signaling protocol for transferring data and/or instructions between the DSP or CPU and the coprocessor may be provided. Furthermore, instructions in the instruction set of the DSP or CPU may be reserved for instructions to be executed on the coprocessor. The open interface, signaling protocol, and number of reserved instruction impose restrictions on the coprocessor, e.g. in terms of the number of different types of instructions that can be executed on the coprocessor. By means of the embodiments disclosed herein, a coprocessor with a relatively high degree of flexibility in terms of different addressing modes may be obtained even under such restrictions. Moreover, the circuit area overhead due to the flexible addressing modes may be relatively low.

The data-processing unit according to any of the embodiments described above may be comprised in an electronic apparatus. The electronic apparatus may e.g. be, but is not limited to, any of a portable or handheld mobile radio communication equipment, a mobile radio terminal, a mobile telephone, a pager, a communicator, an electronic organizer, a smartphone or a computer.

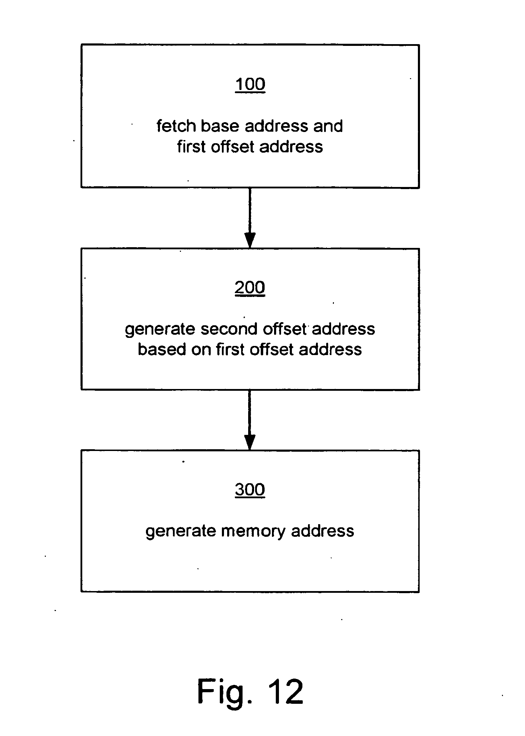

According to some embodiments, a method for generating a memory address for addressing the memory 60 is provided. The method may e.g. be executed by the address-generation unit 30. Fig. 12 shows a flow chart for the method according to an embodiment.

In step 100, the base address and the first offset address are fetched from the first portion 20a and the second portion 20b, respectively, of the register 20.

In step 200, the second offset address is generated based on the first offset address.

In step 300, the memory address is generated by adding the base address and the second offset address.

The address-generation unit 30 may be implemented as an application-specific hardware unit. Alternatively, the address-generation unit 30 may be implemented with a programmable hardware unit, such as, but not limited to, a field-programmable gate array (FPGA) or a processor. Said FPGA may be configured to perform the functions of the address-generation unit 30 as described herein. Similarly, said processor may provided with software instructions for performing the functions of the address-generation unit 30 as described herein. Further alternatively, the address-generation unit 30 may be implemented with a combination of application-specific and programmable hardware units.

The invention may be embedded in a computer program product, which enables implementation of the method and functions described herein. The invention may be carried out when the computer program product is loaded an run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

**Claims**

1. A data-processing unit comprising:

    a register unit (10) comprising a register (20, R0-R3); and
    an address-generation unit (30) for generating a memory address represented with K bits to a memory unit (60), wherein the address-generation unit (30) is adapted to fetch, from the register (20, RO-R3)

    - a base address being represented with L bits,
    wherein L < K, and a first portion (20a) of the register spans L bits in the register (20, R0-R3), the base address being stored in the first portion (20a) of the register (20, R0-R3); and
    - a first offset address being represented with M bits, wherein M < K, and a second portion (20b) of the register spans M bits of the register (20, R0-R3), the first offset address being stored in the second portion (20b) of the register (20, R0-R3); and wherein
    the address generation unit (30) is adapted to receive a first instruction and in response thereto
    - generate a second offset address based on the first offset address; and
    - generate the memory address by adding the base address and the second offset address.

2. The data-processing unit according to claim 1, wherein the L bits representing the base address have the same weights as the L most significant bits of the memory address.

3. The data-processing unit according to claim 1 or 2, wherein the M bits representing the first offset address have the same weights as the M least significant bits of the memory address.

4. The data-processing unit according to any preceding claim, wherein the weight of a most significant bit of the M bits representing the first offset address is higher than or equal to the weight of a least significant bit of the L bits representing the base address.

5. The data-processing unit according to any preceding claim, wherein the address-generation unit (30) is adapted to generate the second offset address identical with the first offset address.

6. The data-processing unit according to any of the claims 1 - 4, wherein
the address-generation unit (30) is adapted to fetch, from the register (20, R0-R3), a mode indicator stored in a third portion (20c) of the register (20, R0-R3); and
the address-generation unit (30) comprises a scrambler unit (70) adapted to generate the second offset address by reordering bits of the first offset address based on the mode indicator.

7. The data-processing unit according to claim 6, wherein the address-generation unit (30) is adapted to fetch, from the register (20, R0-R3), mode-dependent data stored in a fourth portion (20d) of the register, and select which bits in the first offset address to reorder and how to reorder the selected bits in order to generate the second offset address based on the mode-dependent data and the mode indicator.

8. The data-processing unit according to any of the claims 6-7, wherein the scrambler unit (70) is adapted to generate the second offset address identical with the first offset address based on the mode indicator.

9. The data-processing unit according to any of the claims 6-8, wherein the scrambler unit (70) is adapted to generate the second offset address by reversing the order of a range of bits in the first offset address based on the mode indicator.

10. The data-processing unit according to any of the preceding claims, wherein the address-generation unit

(30) is adapted to, in response to receiving the first instruction,

generate an updated first offset address by adding the first offset address and a step value, wherein the updated first offset address is the sum of the first offset address and the step value or a value derived from said sum; and

supply the updated first offset address to the register (20, R0-R3) for storage in the second portion (20b) of the register (20, R0-R3).

11. The data-processing unit according to claim 10, wherein the address-generation unit (30) is adapted to fetch, from the register (20, R0-R3), the step value, which is stored in a fifth portion (20e) of the register (20, R0-R3) .

12. The data-processing unit according to claim 7 or 8, wherein the address-generation unit (30) comprises a modulo-computation unit adapted to generate the updated first offset address by performing a modulo N operation on the sum of the first offset address and the step value, wherein N is an integer.

13. The data-processing unit according to claim 12, wherein the address-generation unit (30) is adapted to fetch, from the register (20, R0-R3), the integer N, which is stored in a sixth portion (20f) of the register

14. The data-processing unit according to any of the preceding claims, wherein the address-generation unit (30) is adapted to

fetch, from the register (20, R0-R3), a third offset address stored in a seventh portion (20g) of the register (20, R0-R3), wherein the third offset address is represented with fewer bits than the memory address; and

receive a second instruction and in response thereto

- generate the second offset address based on the third offset address; and
- generate the memory address by adding the base address and the second offset address.

15. The data-processing unit according to any of the preceding claims, wherein the register (20, R0-R3) is a general-purpose register.

16. The data-processing unit according to any of the preceding claims, wherein the register unit (10) comprises a plurality of registers (R0-R3) and the address-generation unit (30) is adapted to fetch the base address and the first offset address from any one of the plurality of registers (R0-R3) .

17. An electronic apparatus comprising a data-processing unit according to any of the claims 1-16.

18. The electronic apparatus according to claim 17, wherein the electronic apparatus is a portable or handheld mobile radio communication equipment, a mobile radio terminal, a mobile telephone, a pager, a communicator, an electronic organizer, a smartphone or a computer.

19. A method for generating a memory address represented with K bits, comprising
fetching, from a register (20, R0-R3)

- a base address being represented with L bits, wherein L < K, and a first portion (20a) of the register spans L bits in the register (20, R0-R3), the base address being stored in the first portion (20a) of the register (20, R0-R3),
- a first offset address being represented with M bits, wherein M < K, and a second portion (20b) of the register spans M bits in the register (20, R0-R3), the first offset address being stored in the second portion (20b) of the register (20, R0-R3);

generating a second offset address based on the first offset address; and
generating the memory address by adding the base address and the second offset address.

20. A computer program product comprising computer program code means for executing the method according to claim 19, when said computer program code means are run by an electronic device having computer capabilities.

21. A computer readable medium having stored thereon a computer program product comprising computer program code means for executing the method according to claim 19, when said computer program code means are run by an electronic device having computer capabilities.

**Patentansprüche**

1. Datenverarbeitungseinheit, mit:

einer Registereinheit (10) mit einem Register (20, R0-R3); und
einer Adressenerzeugungseinheit (30) zum Erzeugen einer Speicheradresse, die mit K Bits für eine Speichereinheit (60) dargestellt wird, wobei die Adressenerzeugungseinheit (30) ausgelegt ist zum Abrufen, von dem Register (20, R0-R3)

- einer Basisadresse, die dargestellt wird mit L Bits, wobei L<K ist, und sich ein erster Abschnitt (20a) des Registers in dem Register (20, R0-R3) über L Bits erstreckt, wobei die Basisadresse in dem ersten Abschnitt (20a) des Registers (20, R0-R3) gespeichert ist; und
- einer ersten Offsetadresse, die mit M Bits dargestellt wird, wobei M<K ist, und sich ein zweiter Abschnitt (20b) des Registers über M Bits des Registers (20, R0-R3) erstreckt, wobei die erste Offsetadresse in dem zweiten Abschnitt (20b) des Registers (20, R0-R3) gespeichert ist, und wobei die Adressenerzeugungseinheit (30) ausgelegt ist zum Empfangen einer ersten Anweisung und als Antwort darauf zum
- Erzeugen einer zweiten Offsetadresse auf Grundlage der ersten Offsetadresse; und
- Erzeugen der Speicheradresse durch Addieren der Basisadresse und der zweiten Offsetadresse.

2. Datenverarbeitungseinheit nach Anspruch 1, wobei die L Bits, welche die Basisadresse darstellen, die gleichen Gewichte wie die L signifikantesten Bits der Speicheradresse aufweisen.

3. Datenverarbeitungseinheit nach Anspruch 1 oder 2, wobei die M Bits, welche die erste Offsetadresse darstellen, die gleichen Gewichte wie die M am wenigsten signifikanten Bits der Speicheradresse aufweisen.

4. Datenverarbeitungseinheit nach irgendeinem vorhergehenden Anspruch, wobei das Gewicht eines signifikantesten Bits der M Bits, welche die erste Offsetadresse darstellen, höher oder gleich dem Gewicht eines am wenigsten signifikanten Bit der L Bits ist, welche die Basisadresse darstellen.

5. Datenverarbeitungseinheit nach irgendeinem vorhergehenden Anspruch, wobei die Adressenerzeugungseinheit (30) ausgelegt ist, die zweite Offsetadresse identisch mit der ersten Offsetadresse zu erzeugen.

6. Datenverarbeitungseinheit nach irgendeinem der Ansprüche 1 - 4, wobei
die Adressenerzeugungseinheit (30) ausgelegt ist zum Abrufen, aus dem Register (20, R0-R3), einer Betriebsartanzeige, die in einem dritten Abschnitt (20c) des Registers (20, R0-R3) gespeichert ist; und
die Adressenerzeugungseinheit (30) eine Scrambler-Einheit (70) umfasst, die ausgelegt ist zum Erzeugen der zweiten Offsetadresse, durch Umordnung von Bits der ersten Offsetadresse auf Grundlage der Betriebsartanzeige.

7. Datenverarbeitungseinheit nach Anspruch 6, wobei die Adressenerzeugungseinheit (30) ausgelegt ist zum Abrufen, aus dem Register (20, R0-R3), von Betriebsart-abhängigen Daten, die in einem vierten Abschnitt (20d) des Registers gespeichert sind, und zum Auswählen, welche Bits in der ersten Offsetadresse aufgezeichnet werden, und wie die ausgewählten Bits aufgezeichnet werden, um die zweite Offsetadresse auf Grundlage der Betriebsart-abhängigen Daten und der Betriebsartanzeige erzeugen.

8. Datenverarbeitungseinheit nach irgendeinem der Ansprüche 6 - 7, wobei die Scrambler-Einheit (70) ausgelegt ist, die zweite Offsetadresse identisch mit der ersten Offsetadresse auf Grundlage der Betriebsartanzeige zu erzeugen.

9. Datenverarbeitungseinheit nach irgendeinem der Ansprüche 6 - 8, wobei die Scrambler-Einheit (70) ausgelegt ist zum Erzeugen der zweiten Offsetadresse, durch Umkehr der Reihenfolge eines Bereichs von Bits in der ersten Offsetadresse auf Grundlage der Betriebsartanzeige.

10. Datenverarbeitungseinheit nach irgendeinem der vorhergehenden Ansprüche, wobei die Adressenerzeugungseinheit (30), als Antwort auf den Empfang der ersten Anweisung, ausgelegt ist zum Erzeugen einer aktualisierten ersten Offsetadresse durch Addieren der ersten Offsetadresse und eines Schrittwertes, wobei die aktualisierte erste Offsetadresse die Summe der ersten Offsetadresse und des Schrittwertes ist oder ein Wert, der von der Summe abgeleitet wird; und
Liefern der aktualisierten ersten Offsetadresse an das Register (20, R0-R3), zum Speichern in dem zweiten Abschnitt (20b) des Registers (20, R0-R3).

11. Datenverarbeitungseinheit nach Anspruch 10, wobei die Adressenerzeugungseinheit (30) ausgelegt ist zum Abrufen, aus dem Register (20, R0-R3), des Schrittwertes, der in einem fünften Abschnitt (20e) des Registers (20, R0-R3) gespeichert wird.

12. Datenverarbeitungseinheit nach Anspruch 7 oder 8, wobei die Adressenerzeugungseinheit (30) eine Modulo-Berechnungseinheit umfasst, die ausgelegt ist zum Erzeugen der aktualisierten ersten Offsetadresse, durch Durchführen einer Modulo-N-Operation an der Summe der ersten Offsetadresse und dem Schrittwert, wobei N eine ganze Zahl ist.

13. Datenverarbeitungseinheit nach Anspruch 12, wobei die Adressenerzeugungseinheit (30) ausgelegt ist zum Abrufen, aus dem Register (20, R0-R3), der ganzen Zahl N, die in einem sechsten Abschnitt (20f) des Registers gespeichert ist.

14. Datenverarbeitungseinheit nach irgendeinem der vorhergehenden Ansprüche, wobei die Adressenerzeugungseinheit (30) ausgelegt ist zum Abrufen, aus dem Register (20, R0-R3), einer dritten Offsetadresse, die in einem siebenten Abschnitt (20g) des Registers (20, R0-R3) gespeichert ist, wobei die dritte Offsetadresse mit weniger Bits als die Speicheradresse dargestellt wird; und

Empfangen einer zweiten Anweisung und als Antwort darauf zum

- Erzeugen der zweiten Offsetadresse auf Grundlage der dritten Offsetadresse; und
- Erzeugen der Speicheradresse durch Addieren der Basisadresse und der zweiten Offsetadresse.

**15.** Datenverarbeitungseinheit nach irgendeinem der vorhergehenden Ansprüche, wobei das Register (20, R0-R3) ein Universalregister ist.

**16.** Datenverarbeitungseinheit nach irgendeinem der vorhergehenden Ansprüche, wobei die Registereinheit (10) eine Vielzahl von Registern (20, R0-R3) umfasst und die Adressenerzeugungseinheit ausgelegt ist zum Abrufen der Basisadresse und der ersten Offsetadresse aus irgendeinem der Vielzahl von Registern (20, R0-R3).

**17.** Elektronische Vorrichtung mit einer Datenverarbeitungseinheit nach irgendeinem der Ansprüche 1-16.

**18.** Elektronische Vorrichtung nach Anspruch 17, wobei die elektronische Vorrichtung eine tragbare oder in der Hand haltbare Mobilfunk-Kommunikationsvorrichtung, ein Mobilfunk-Terminal, ein Mobiltelefon, ein Pager, eine Kommunikationsvorrichtung, ein elektronischer Organisator, ein Smartphone oder ein Computer ist.

**19.** Verfahren zum Erzeugen einer Speicheradresse, die mit K Bits dargestellt wird, umfassend Abrufen, aus einem Register (20, R0-R3)

- einer Basisadresse, die dargestellt wird mit L Bits, wobei L<K ist, und sich ein erster Abschnitt (20a) des Registers über L Bits in dem Register (20, R0-R3) erstreckt, wobei die Basisadresse in dem ersten Abschnitt (20a) des Registers (20, R0-R3) gespeichert ist;
- einer ersten Offsetadresse, die mit M Bits dargestellt wird, wobei M<K ist, und sich ein zweiter Abschnitt (20b) des Registers über M Bits in dem Register (20, R0-R3) erstreckt, wobei die erste Offsetadresse in dem zweiten Abschnitt (20b) des Registers (20, R0-R3) gespeichert wird,
- Erzeugen einer zweiten Offsetadresse auf Grundlage der ersten Offsetadresse; und
- Erzeugen der Speicheradresse durch Addieren der Basisadresse und der zweiten Offsetadresse.

**20.** Computerprogrammprodukt mit einem Computerprogrammcodemittel zum Ausführen des Verfahrens nach Anspruch 19, wenn das Computerprogrammcodemittel durch eine elektronische Vorrichtung mit Computerfähigkeiten ausgeführt wird.

**21.** Computerlesbares Medium mit einem darauf gespeicherten Computerprogrammprodukt, das ein Computerprogrammcodemittel umfasst zum Ausführen des Verfahrens nach Anspruch 19, wenn das Computerprogrammcodemittel durch eine elektronische Vorrichtung mit Computerfähigkeiten ausgeführt wird.

**Revendications**

**1.** Unité de traitement de données, comprenant :

une unité de registres (10) comprenant un registre (20, R0 à R3) ; et
une unité de production d'adresse (30), destinée à produire une adresse en mémoire représentée par K bits, dans une unité de mémoire (60), l'unité de production d'adresse (30) étant conçue pour lire dans le registre (20, R0 à R3) :

- une adresse de base représentée par L bits, avec L < K et une première partie (20a) du registre s'étendant sur L bits dans le registre (20, R0 à R3), l'adresse de base étant stockée dans la première partie (20a) du registre (20, R0 à R3) ; et
- une première adresse de décalage représentée par M bits, avec M < K et une deuxième partie (20b) du registre s'étendant sur M bits du registre (20, R0 à R3), la première adresse de décalage étant stockée dans la deuxième partie (20b) du registre (20, R0 à R3) ; et

dans laquelle l'unité de production d'adresse (30) est conçue pour recevoir une première instruction et pour, en réponse :
- produire une deuxième adresse de décalage en fonction de la première adresse de décalage ; et
- produire l'adresse en mémoire en additionnant l'adresse de base et la deuxième adresse de décalage.

**2.** Unité de traitement de données selon la revendication 1, dans laquelle les L bits représentant l'adresse de base ont le même poids que les L bits de poids fort de l'adresse en mémoire.

**3.** Unité de traitement de données selon la revendication 1 ou 2, dans laquelle les M bits représentant la première adresse de décalage ont le même poids que les M bits de poids faible de l'adresse en mémoire.

4. Unité de traitement de données selon l'une quelconque des revendications précédentes, dans laquelle le poids d'un bit de poids fort dans les M bits représentant la première adresse de décalage est supérieur ou égal au poids d'un bit de poids faible des L bits représentant l'adresse de base.

5. Unité de traitement de données selon l'une quelconque des revendications précédentes, dans laquelle l'unité de production d'adresse (30) est conçue pour produire la deuxième adresse de décalage identique à la première adresse de décalage.

6. Unité de traitement de données selon l'une quelconque des revendications 1 à 4, dans laquelle :

   l'unité de production d'adresse (30) est conçue pour lire dans le registre (20, R0 à R3) un indicateur de mode stocké dans une troisième partie (20c) du registre (20, R0 à R3) ; et
   l'unité de production d'adresse (30) comprend une unité de brouillage (70) conçue pour produire la deuxième adresse de décalage en réordonnant des bits de la première adresse de décalage, en fonction de l'indicateur de mode.

7. Unité de traitement de données selon la revendication 6, dans laquelle l'unité de production d'adresse (30) est conçue pour lire dans le registre (20, R0 à R3) des données qui dépendent du mode et sont stockées dans une quatrième partie (20d) du registre et pour sélectionner les bits de la première adresse de décalage qui doivent être réordonnés et comment réordonner les bits sélectionnés afin de produire la deuxième adresse de décalage, en fonction des données qui dépendent du mode et de l'indicateur de mode.

8. Unité de traitement de données selon l'une quelconque des revendications 6 et 7, dans laquelle l'unité de brouillage (70) est conçue pour produire la deuxième adresse de décalage identique à la première adresse de décalage en fonction de l'indicateur de mode.

9. Unité de traitement de données selon l'une quelconque des revendications 6 à 8, dans laquelle l'unité de brouillage (70) est conçue pour produire la deuxième adresse de décalage en inversant l'ordre d'une série de bits dans la première adresse de décalage, en fonction de l'indicateur de mode.

10. Unité de traitement de données selon l'une quelconque des revendications précédentes, dans laquelle l'unité de production d'adresse (30) est conçue pour, après réception de la première instruction :

   produire une première adresse de décalage mise à jour en additionnant la première adresse de décalage et une première valeur de pas, la première adresse de décalage mise à jour étant la somme de la première adresse de décalage et de la valeur de pas ou une valeur dérivée de ladite somme ; et
   fournir la première adresse de décalage mise à jour au registre (20, R0 à R3), pour stockage dans la deuxième partie (20b) du registre (20, R0 à R3).

11. Unité de traitement de données selon la revendication 10, dans laquelle l'unité de production d'adresse (30) est conçue pour lire dans le registre (20, R0 à R3) la valeur de pas, qui est stockée dans une cinquième partie (20e) du registre (20, R0 à R3).

12. Unité de traitement de données selon la revendication 7 ou 8, dans laquelle l'unité de production d'adresse (30) comprend une unité de calcul modulo conçue pour produire la première adresse de décalage mise à jour en effectuant une opération modulo N sur la somme de la première adresse de décalage et de la valeur de pas, N étant un entier.

13. Unité de traitement de données selon la revendication 12, dans lequel l'unité de production d'adresse (30) est conçue pour lire dans le registre (20, R0 à R3) l'entier N, qui est stocké dans une sixième partie (20f) du registre.

14. Unité de traitement de données selon l'une quelconque des revendications précédentes, dans laquelle l'unité de production d'adresse (30) est conçue pour :

   lire dans le registre (20, R0 à R3) une troisième adresse de décalage stockée dans une septième partie (20g) du registre (20, R0 à R3), la troisième adresse de décalage étant représentée à l'aide de moins de bits que l'adresse en mémoire ; et

   recevoir une deuxième instruction et, en réponse :

   - produire la deuxième adresse de décalage en fonction de la troisième adresse de décalage ; et
   - produire l'adresse en mémoire en additionnant l'adresse de base et la deuxième adresse de décalage.

15. Unité de traitement de données selon l'une quelconque des revendications précédentes, dans laquelle le registre (20, R0 à R3) est un registre d'usage général.

**16.** Unité de traitement de données selon l'une quelconque des revendications précédentes, dans laquelle l'unité de registres (10) comprend une pluralité de registres (R0 à R3) et l'unité de production d'adresse (30) est conçue pour lire l'adresse de base et la première adresse de décalage dans un registre quelconque parmi la pluralité de registres (R0 à R3).

**17.** Appareil électronique comprenant une unité de traitement de données selon l'une quelconque des revendications 1 à 16.

**18.** Appareil électronique selon la revendication 17, dans lequel l'appareil électronique est un équipement de communication radio mobile portatif ou manuel, un terminal radio mobile, un téléphone mobile, un boîtier de recherche de personnes, un communicateur, un organisateur électronique, un téléphone intelligent ou un ordinateur.

**19.** Procédé de production d'une adresse en mémoire représentée sur K bits, comprenant les étapes consistant à :

lire dans un registre (20, R0 à R3) :

- une adresse de base représentée par L bits, avec L < K, une première partie (20a) du registre s'étendant sur L bits dans le registre (20, R0 à R3), l'adresse de base étant stockée dans la première partie (20a) du registre (20, R0 à R3) ;
- une première adresse de décalage représentée par M bits, avec M < K et une deuxième partie (20b) du registre s'étendant sur M bits du registre (20, R0 à R3), la première adresse de décalage étant stockée dans la deuxième partie (20b) du registre (20, R0 à R3) ;

produire une deuxième adresse de décalage en fonction de la première adresse de décalage ; et produire l'adresse en mémoire en additionnant l'adresse de base et la deuxième adresse de décalage.

**20.** Progiciel d'ordinateur comprenant un moyen de code de programme d'ordinateur destiné à exécuter le procédé selon la revendication 19, lorsque ledit moyen de code de programme d'ordinateur est exécuté par un dispositif électronique ayant des capacités d'ordinateur.

**21.** Support lisible par ordinateur portant enregistré un progiciel d'ordinateur comprenant un moyen de code de programme d'ordinateur destiné à exécuter le procédé selon la revendication 19, lorsque ledit moyen de code de programme est exécuté par un dispositif électronique ayant des capacités d'ordinateur.

Fig. 1

Fig. 3

60

ML$_J$

possible buffer start addresses

max buffer size

ML$_2$

ML$_1$

ML$_0$

# Fig. 2

| 20a | 20b | 20c | 20d | - - - - - - - - - - - - - - - - - - - - - - - - |

20

10

70
scrambler unit

50

40

30

memory address

Fig. 4

updated first offset address

| 20a | 20b | - - - - - - - - - - - - - - - - - - - - - - - - - - - - - - - - - - |

20

10

30
address-generation unit

memory address

Fig. 5

updated first offset address

| 20a | 20b | -------- | 20e | ------------------------------------- |

20

30
address-generation unit

memory address

10

# Fig. 6

updated first offset address

| 20a | 20b | ---------------- | 20f | ---------------------------------- |

20

30
address-generation unit

memory address

10

# Fig. 7

| 20a | 20b | -------------------------------- | 20g | ---------------- |
|-----|-----|--------------------------------|-----|------------------|

20

10

**40**
offset-proc.
unit

50

30

memory address

# Fig. 8

| 20a | 20b | 20c | 20d | 20e | 20f | 20g |
|-----|-----|-----|-----|-----|-----|-----|

20

# Fig. 10

updated offset address

R0

R1

R2

R3

10

<u>30</u>
address-generation unit

memory address

Fig. 9

| Ø | $b_4$ | $b_3$ | $b_2$ | $b_1$ | $b_0$ | Ø | Ø | Ø | Ø | Ø | Ø |
|---|---|---|---|---|---|---|---|---|---|---|---|

~80

$+$

| Ø | Ø | Ø | Ø | Ø | Ø | $o_4$ | $o_3$ | $o_2$ | $o_1$ | $o_0$ | Ø |
|---|---|---|---|---|---|---|---|---|---|---|---|

~82

| $m_{11}$ | $m_{10}$ | $m_9$ | $m_8$ | $m_7$ | $m_6$ | $m_5$ | $m_4$ | $m_3$ | $m_2$ | $m_1$ | $m_0$ |
|---|---|---|---|---|---|---|---|---|---|---|---|

~84

## Fig. 11a

| $b_5$ | $b_4$ | $b_3$ | $b_2$ | $b_1$ | $b_0$ | Ø | Ø | Ø | Ø | Ø | Ø |
|---|---|---|---|---|---|---|---|---|---|---|---|

~80

$+$

| Ø | Ø | Ø | Ø | $o_6$ | $o_5$ | $o_4$ | $o_3$ | $o_2$ | $o_1$ | $o_0$ | Ø |
|---|---|---|---|---|---|---|---|---|---|---|---|

~82

| $m_{11}$ | $m_{10}$ | $m_9$ | $m_8$ | $m_7$ | $m_6$ | $m_5$ | $m_4$ | $m_3$ | $m_2$ | $m_1$ | $m_0$ |
|---|---|---|---|---|---|---|---|---|---|---|---|

~84

## Fig. 11b

Fig. 12